# EUROPEAN PATENT SPECIFICATION

(11) **EP 3 879 929 B1**
(45) Date of publication and mention of the grant of the patent: **23.08.2023**
(21) Application number: 21162048.9
(22) Date of filing: 11.03.2021
(51) Int. Cl.: H05B 6/12

(54) **ELECTRIC RANGE**
ELEKTRISCHE HERDPLATTE
APPAREIL ÉLECTRIQUE

(30) Priority: 12.03.2020 KR 20200030921
(43) Date of publication of application: 15.09.2021
(73) Proprietor: LG Electronics Inc., Seoul 07336 (KR)
(72) Inventor: KIM, Seunghak, 153-802 Seoul (KR); CHO, Junghyeon, 153-802 Seoul (KR); LEE, Jaeho, 153-802 Seoul (KR)
(74) Representative: Ter Meer Steinmeister & Partner

(56) References cited:
- EP-A1- 1 445 544
- EP-A1- 2 312 910
- EP-A1- 3 104 665
- EP-A1- 3 386 272
- EP-A1- 3 544 376

## Description

### FIELD

Disclosed herein is an electric range, and more particularly, an electric range that can ensure prevention of sagging of a base plate, onto which a heating unit is mounted, in the gravity direction.

### BACKGROUND

Various types of cooking appliances are used to heat food at homes or restaurants. The cooking appliances include gas ranges using gas and electric ranges using electricity.

The electric ranges are classified as resistance heating-type electric ranges and induction heating-type electric ranges.

In a resistance heating method, electric current is supplied to a metallic resistance wire or a non-metallic heat generation element such as silicon carbide to generate heat, and the generated heat is radiated or conducted to heat an object to be heated (e.g., a cooking vessel such as a pot, a frying pan and the like).

In an induction heating method, high-frequency power is supplied to a coil to generate a magnetic field around the coil, and eddy current produced in the generated magnetic field is used to heat an object to be heated made of a metallic material.

Regarding basic theories of induction heating, when electric current is supplied to a working coil or a heating coil, heat is generated while an object to be heated is inductively heated, and the object to be heated is heated by the generated heat.

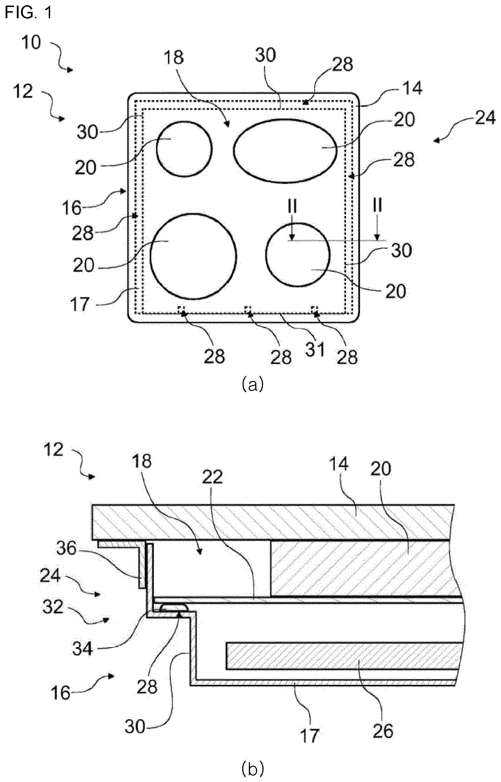

FIG. 1 is a view showing a shape of the related art.

FIG.1 is presented in European Patent No. 2,765,827.

Referring to FIG. 1, in the related art, a support portion, formed by bending of a part of a lateral wall 30 of a housing, supports a single shield plate 22. A plurality of heating units (heating coils) 20 is disposed on the single shield plate 22.

In this case, the shield plate 22 sags due to weight of the plurality of heating units 20 themselves because the plurality of heating units 20 is supported by the single shield plate 22. However, the related art deals with no solution to the problem of sagging of the shield plate 22.

Additionally, in a large-sized induction heating device of the related art, a single dual heating coil and a plurality of single heating coils are disposed on a single base plate. The dual heating coil is disposed at the center of the base plate, and the plurality of single heating coils is disposed on the left and right sides of the dual heating coil.

In the large-sized induction heating device of the related art, the base plate has a higher tendency to sag down.

EP 2 312 910 A1 discloses a heating device usable with a cooking appliance, including a working coil formed by spirally winding a conducting wire, and a sheet member arranged to support the working coil and having a supporting plane facing the working coil. Individual windings of the conducting wire, which constitute individual turns of the working coil, are spaced apart from neighboring windings by a predetermined distance. Spaces are defined between the individual neighboring windings of the conducting wire without a structure to guide the working coil.

EP 3 386 272 A1 presents an induction hob device, with at least one web-shaped holding element, which is provided at least to be supported on at least one housing side wall of a housing unit and at least one heating unit to hold at least partially. The holding element is designed in one piece and/or the housing side wall has at least one fixed support surface for the holding element.

### SUMMARY

### Technical Problem

It is an object of the present invention to provide an electric range that may ensure prevention of sagging (a bend) of a base plate, on which a heating unit is mounted, in the gravity direction.

It is another object of the present invention to provide an electric range that may effectively deliver heat, generated by a heating unit, to a cover plate.

It is another object of the present invention to provide an electric range in which a base plate may be readily installed in a case.

Aspects are not limited to the above ones, and other aspects and advantages that are not mentioned above can be clearly understood from the following description and can be more clearly understood from the embodiments set forth herein.

### Technical Solution

One or more of these objects are solved by the features of the independent claim. An electric range according to the present invention uses a plurality of divided base plates instead of a single base plate, thereby preventing sagging of the base plate in the gravity direction.

In the electric range, at least one end of each of the plurality of base plates may be bent, thereby further preventing the sagging of the base plate and improving strength of the base plate.

In the electric range, at least one end of each of the plurality of base plates may be bent in a Z shape or an inverse Z shape, thereby further preventing the sagging of the base plate and disposing the plurality of base plates in a case stably.

The electric range may include a reinforcement beam between adjacent base plates, thereby disposing the plurality of base plates in the case more stably.

In the electric range, the plurality of base plates may be mounted onto a plurality of mounting portions having the same height, thereby mounting the plurality of base plates into the case without causing a difference in heights of the base plates.

The electric range may use the plurality of lightweight base plates, thereby readily manufacturing and assembling an electric range.

In the electric range, the plurality of base plates are disposed side by side to cover an entire surface area of the case, thereby completely blocking noise between a heating unit and electronic components below the base plate. Further, the electronic components may be freely disposed, and a size of the case may be reduced and a small-sized electric range may be m anufa ctured

According to one aspect, an electric range comprises: a case; a cover plate coupled to the case for placing an object to be heated on the cover plate; a plurality of heating units accommodated in the case and disposed below the cover plate for heating the object; and a plurality of base plates disposed in and/or coupled to the case. The heating units are disposed on the base plates, i.e. disposed in an upper portion thereof. An area of the plurality of base plates may correspond to a cross-sectional area of the case, e.g. in a horizontal plane. The plurality of base plates are disposed side by side to extend from one side surface of the case to another side surface of the case opposite thereto, i.e. to cover a cross-sectional area of the case. That is, the plurality of base plates are disposed in contact with each other and/or coupled to each other, and/or the plurality of base plates may be disposed in contact with the case and/or coupled to the case. The plurality of base plates may be disposed one adjacent to the other along a straight line, e.g. from a left or first side surface of the case to a right or second side surface of the case.

According to one aspect, an electric range comprises: a case; a cover plate coupled to an upper end of the case and allowing an object to be heated to be placed on an upper surface thereof; a plurality of heating units disposed below the cover plate and configured to heat the object to be heated; and a plurality of base plates disposed at a middle end of the case and provided with the plurality of heating units in an upper portion thereof. The plurality of base plates are disposed side by side to entirely cover the middle end of the case.

These aspects may include one or more of the following features:
Each of the plurality of base plates may include a flat plate and at least one bent portion formed at an end of the flat plate. Each of the plurality of base plates may include a flat plate and a plurality of bent portions formed respectively at a plurality of ends or edges of the flat plate.

The at least one bent portion may extend from the flat plate in vertical direction and/or at an angle of about 90°. The base plate(s) may be mounted within the case such that the flat plate(s) may extend in horizontal direction.

At least a part of one or more bent portions among the plurality of bent portions may be disposed to contact a side surface of the case.

Each of the base plates may include a bent portion in contact with and/or coupled to a bent portion of an adjacent base plate. Each of the bent portions formed on base plates adjacent to each other among the plurality of base plates may be disposed to contact each other and/or may be coupled to each other.

The plurality of base plates may include a first base plate, a second base plate and a third base plate. The first base plate, the second base plate and the third base plate may be arranged one after the other along a straight line. The first base plate may be disposed between the second base plate and the third base plate. That is, the plurality of base plates may include a first base plate, a second base plate on a right side of the first base plate, and a third base plate on a left side of the first base plate.

At least one of a left end (or edge) and a right end (or edge) of each of the first base plate, the second base plate and the third base plate may be bent.

At least one of the plurality of base plates may include a flat plate, a first bent portion extending from said flat plate in vertical direction, and a second bent portion extending from the first bent portion in horizontal direction such that the flat plate, the first bent portion and the second bent portion form a stepped shape or a Z shape. The second bent portion may extend from the first bent portion in a direction away from the flat plate and/or in a direction towards an adjacent base plate. First bent portions formed at neighboring and/or parallel edges of adjacent base plates may have surfaces extending in parallel to each other, i.e. in vertical direction. Second bent portions formed at neighboring and/or parallel edges of adjacent base plates may be overlapping one another and/or in contact with one another and/or mounted at one another.

The first bent portion of at least one of the base plates which is formed at an edge of said base plate adjacent to a side surface of the case may be in surface contact with said side surface of the case. The second bent portion of at least one of the base plates which is formed at an edge of said base plate adjacent to a side surface of the case may bear or rest on an upper end of a side surface of the case.

The electric range may further comprise a reinforcement beam accommodated within the casing and having one end connected to a first side surface of the case and the other end connected to a second side surface of the case (102) facing the first side surface. The reinforcement beam may be disposed between first bent portions formed at neighboring and/or parallel edges of adjacent base plates (108a, 108b). The reinforcement beam may support at least one of the second bent portions formed at neighboring and/or parallel edges of adjacent base plates.

The first base plate may include a first flat plate, a (1-1)th bent portion, and a (1-2)th bent portion, wherein the (1-1)th bent portion and the (1-2)th bent portion may correspond to or may be formed at the right end of the first base plate. One end of the (1-1)th bent portion may be bent at a right end of the first flat plate and one end of the (1-2)th bent portion may be bent at the other end of the (1-1)th bent portion. The right end of the first flat plate, the (1-1)th bent portion (1104a) and the (1-2)th bent portion (1104b) may have a stepped shape or a Z shape or an inverse Z shape.

The second base plate may include a second flat plate, a (2-3)th bent portion, and a (2-4)th bent portion, wherein the (2-3)th bent portion and the (2-4)th bent portion correspond to or are formed at the left end of the second base plate. One end of the (2-3)th bent portion may be bent at a left end of the second flat plate, and one end of the (2-4)th bent portion may be bent at the other end of the (2-3)th bent portion. The left end of the second flat plate, the (2-3)th bent portion and the (2-4)th bent portion may have a stepped shape or a Z shape.

The (1-1)th bent portion (1104a) and the (2-3)th bent portion (1206a) may be disposed in parallel. The (1-2)th bent portion may be mounted onto the (2-4)th bent portion or the (2-4)th bent portion may be mounted onto the (1-2)th bent portion.

The electric range may further comprise a first reinforcement beam having one end of which is connected to a first side surface of the case and the other end of which is connected to a second side surface of the case facing the first side surface of the case. The first reinforcement beam may be disposed between the (1-1)th bent portion and the (2-3)th bent portion. An upper end of the first reinforcement beam may contact a lower portion of the (1-2)th bent portion or a lower portion of the (2-4)th bent portion.

The second base plate may further include a (2-1)th bent portion and a (2-2)th bent portion, wherein the (2-1)th bent portion and the (2-2)th bent portion correspond to the right end of the second base plate. One end of the (2-1)th bent portion may be bent at a right end of the second flat plate and/or one end of the (2-2)th bent portion may be bent at the other end of the (2-1)th bent portion. The right end of the second flat plate, the (2-1)th bent portion and the (2-2)th bent portion may have an inverse Z shape. The (2-2)th bent portion may be mounted onto a third side surface of the case.

The first base plate may further include a (1-3)th bent portion and a (1-4)th bent portion, wherein the (1-3)th bent portion (1106a) and the (1-4)th bent portion (1106b) correspond to the left end of the first base plate. One end of the (1-3)th bent portion may be bent at a left end of the first flat plate, and/or one end of the (1-4)th bent portion may be bent at the other end of the (1-3)th bent portion. The left end of the first flat plate, the (1-3)th bent portion and the (1-4)th bent portion may have a Z shape.

The third base plate may include a third flat plate, a (3-1)th bent portion, and a (3-2)th bent portion, wherein the (3-1)th bent portion (1304a) and the (3-2)th bent portion may correspond to the right end of the second base plate. One end of the (3-1)th bent portion may be bent at a right end of the third flat plate, and/or one end of the (3-2)th bent portion may be bent at the other end of the (3-1)th bent portion. The right end of the third flat plate, the (3-1)th bent portion and the (3-2)th bent portion may have a Z shape.

The (1-3)th bent portion and the (3-1)th bent portion may be disposed in parallel.

The (1-4)th bent portion may be mounted onto the (3-2)th bent portion or the (3-2)th bent portion may be mounted onto (1-4)th bent portion.

The electric range may further comprise a second reinforcement beam having one end of which is connected to first side surface of the case and the other end of which is connected to a second side surface of the case facing the first side surface of the case.

The second reinforcement beam may be disposed between the (1-3)th bent portion and the (3-1)th bent portion.

An upper end of the second reinforcement beam may contact a lower portion of the (1-4)th bent portion and/or a lower portion of the (3-2)th bent portion.

The third base plate may further include a (3-3)th bent portion and a (3-4)th bent portion, wherein the (3-3)th bent portion and the (3-4)th bent portion correspond to the left end of the third base plate. One end of the (3-3)th bent portion may be bent at a left end of the third flat plate, and/or one end of the (3-4)th bent portion may be bent at the other end of the (3-3)th bent portion. The left end of the third flat plate, and the (3-3)th bent portion and the (3-4)th bent portion may have a Z shape.

The (3-4)th bent portion may be mounted onto a left side surface of the case.

The electric range may be an electric resistance-type electric range or an induction heating-type electric range. Directional indication, such as height, heightwise or vertical direction, width, upper end, lower end etc. refer to an orientation when the electric range is in its operative state or position. In particular, a heightwise direction can also be referred to as vertical direction. Width may denote a dimension in the horizontal direction, in particular in a horizontal direction parallel to a (vertical) front surface of the case of the electric range which will be facing a user during operation. Thus, left end and right end may denote respectively a first lateral end and a second lateral end with respect to an operative state or position of the electric range. Likewise a front end may denote an end that is closer to a user when operating the electric range, while a rear end may denote an end that is farther from a user when operating the electric range.

### Advantageous Effect

According to the present disclosure, a base plate, on which a heating unit is mounted, may be prevented from sagging in the gravity direction.

According to the present disclosure, heat generated by a heating unit may be effectively delivered to a cover plate.

According to the present disclosure, a base plate may be readily installed in a case when an electric range is assembled.

According to the present disclosure, no additional work for improving strength of a base plate is required. That is, the strength of the base plate may improve without adding a rib, a bead and the like.

According to the present disclosure, a plurality of base plates may completely block noise between a heating unit and electronic components below the base plates. Thus, the electronic components may be freely disposed, a size of the case may be reduced, and a space for installing an electric range may be reduced.

Specific effects are described along with the above-described effects in the section of Detailed Description.

### BRIEF DESCRIPTION OF DRAWING

The accompanying drawings constitute a part of this specification, illustrate one or more embodiments of the present disclosure, and together with the specification, explain the present disclosure, wherein:
FIG. 1 is a cross-sectional view showing an electric range of the related art;
FIG. 2 is a perspective view showing an induction heating device according to one embodiment;
FIGS. 3 to 6 are perspective views showing the induction heating device in FIG. 2 without some components;
FIG. 7 is a perspective view showing a first base plate according to a first embodiment;
FIG. 8 is a perspective view showing a second base plate and a third base plate according to the first embodiment;
FIG. 9 is a cross-sectional view showing a base plate disposed in a case, according to the first embodiment;
FIG. 10 are perspective views showing a bracket according to one embodiment;
FIG. 11 is a perspective view showing a case in which a base plate according to a second embodiment is disposed;
FIG. 12 is a perspective view showing a case in which a reinforcement beam is disposed, according to the second embodiment;
FIG. 13 is a perspective view showing a first base plate according to the second embodiment;
FIG. 14 is a perspective view showing a second base plate and a third base plate according to the second embodiment; and
FIG. 15 is a cross-sectional view showing a base plate disposed in a case, according to the second embodiment.

### DETAILED DESCRIPTION

The above-described aspects, features and advantages are specifically described hereunder with reference to the accompanying drawings such that one having ordinary skill in the art to which the present disclosure pertains can easily implement the technical idea of the disclosure. In the disclosure, detailed description of known technologies in relation to the disclosure is omitted if it is deemed to make the gist of the disclosure unnecessarily vague. Below, preferred embodiments according to the disclosure are specifically described with reference to the accompanying drawings. In the drawings, identical reference numerals can denote identical or similar components.

The terms "first", "second" and the like are used herein only to distinguish one component from another component. Thus, the components should not be limited by the terms. Certainly, a first component can be a second component unless stated to the contrary.

When one component is described as being "in an upper portion (or a lower portion)" of another component, or "on (or under)" another component, one component can be placed on the upper surface (or under the lower surface) of another component, and an additional component may be interposed between another component and one component on (or under) another component.

When one component is described as being "connected", "coupled", or "connected" to another component, one component can be directly connected, coupled or connected to another component; however, it is also to be understood that an additional component can be "interposed" between the two components, or the two components can be "connected", "coupled", or "connected" through an additional component.

Throughout the disclosure, each component can be provided as a single one or a plurality of ones, unless explicitly stated to the contrary.

The singular forms "a", "an" and "the" are intended to include the plural forms as well, unless explicitly indicated otherwise. It should be further understood that the terms "comprise" or "have," set forth herein, are not interpreted as necessarily including all the stated components or steps but can be interpreted as including some of the stated components or steps or can be interpreted as further including additional components or steps.

Throughout the disclosure, the terms "A and/or B" as used herein can denote A, B or A and B, and the terms "C to D" can denote C or greater and D or less, unless stated to the contrary.

Below, an electric range is described with reference to several embodiments.

The electric range in the disclosure may include an electric resistance-type electric range and an induction heating-type electric range (i.e., an induction heating device). For convenience, an induction heating device, provided with a working coil as a heating unit, is described as an example during description of the embodiments. However, embodiments are not limited to those set forth herein.

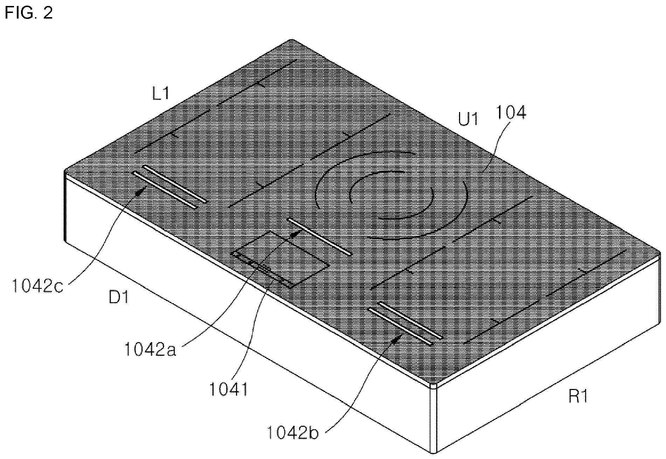

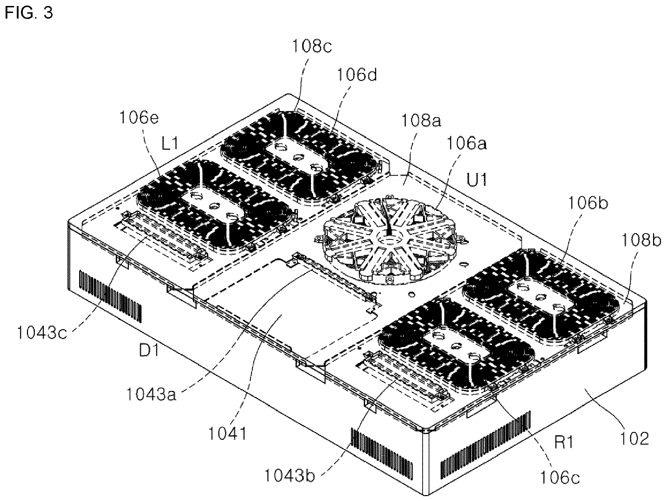

FIG. 2 is a perspective view showing an induction heating device 100 according to one embodiment. FIGS. 3 to 6 are perspective views showing the induction heating device 100 in FIG. 2 without some components.

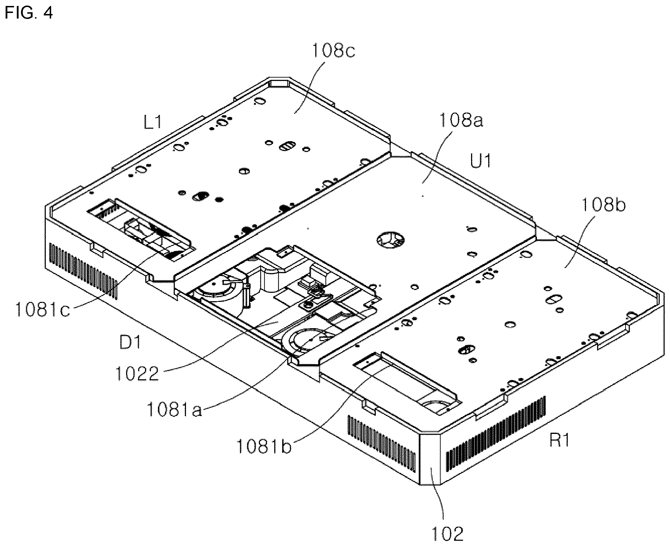

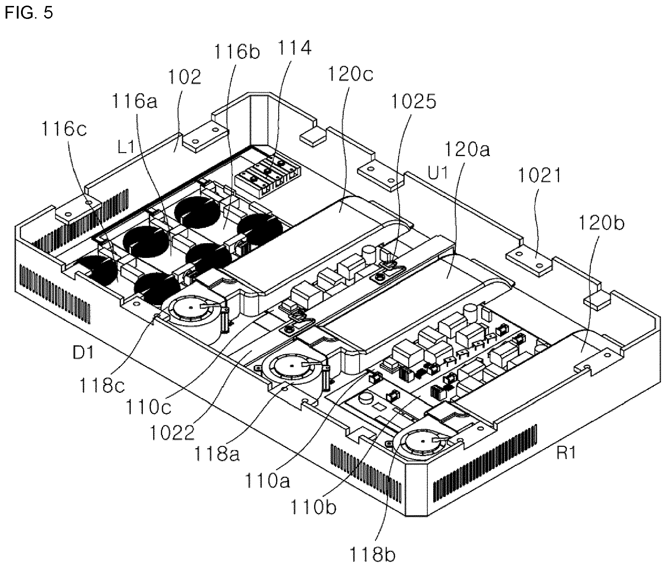

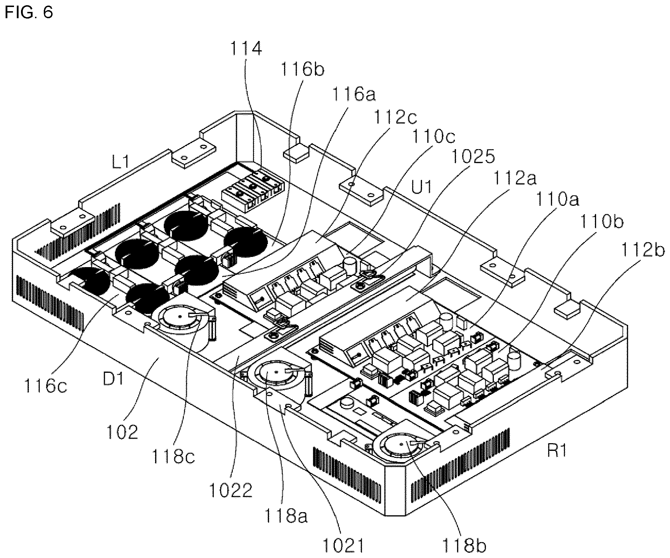

Specifically, FIG. 3 is a view showing the induction heating device 100 in FIG. 2 without a cover plate 104, FIG. 4 is a view showing the induction heating device 100 in FIG. 2 without a cover plate 104 and a working coil 106a, 106b, 106c, 106d, 106e, FIG. 5 is a view showing the induction heating device 100 in FIG. 2 without a cover plate 104, a working coil 106a, 106b, 106c, 106d, 106e, and a base plate 108a, 108b, 108c, and FIG. 6 is a view showing the induction heating device 100 in FIG. 2 without a cover plate 104, a working coil 106a, 106b, 106c, 106d, 106e, a base plate 108a, 108b, 108c and an air guide 120a, 120b, 120c.

Referring to FIGS. 2 to 6, the induction heating device 100 according to one embodiment may include a case 102, a cover plate 104, a working coil 106a, 106b, 106c, 106d, 106e, a base plate 108a, 108b, 108c, a driving circuit 110a, 110b, 110c, a heat sink 112a, 112b, 112c, a power feeder 114, a filter circuit 116a, 116b, 116c, an air blowing fan 118a, 118b, 118c, and an air guide 120a, 120b, 120c.

The case 102 may protect components in the induction heating device 100. For example, the case 102 may be made of aluminum but not limited. The case 102 may be thermally insulated to prevent heat, generated by the working coil 106a, 106b, 106c, 106d, 106e, from leaking outward.

The cover plate 104 may be coupled to an upper end of the case 102 to shield an inside of the case 102, and an object to be heated (not illustrated, an object to be heated by one or more working coils 106a, 106b, 106c, 106d, 106e) may be placed on an upper surface of the cover plate 104.

An object to be heated such as a cooking vessel may be placed on the upper surface of the cover plate 104, and heat generated by the working coil 106a, 106b, 106c, 106d, 106e may be delivered to the object to be heated through the upper surface of the cover plate104.

The cover plate 104 may be made of glass but not limited.

An input interface 1041 configured to receive an input from a user may be disposed on the upper surface of the cover plate 104. The input interface 1041 may be buried into the upper surface of the cover plate 104 and may display a specific image. The input interface 1041 may receive a touch input from the user, and the induction heating device 100 may be driven based on the received touch input.

Specifically, the input interface 1041 may be a module for inputting a heating intensity or a heating period and the like desired by the user, and may be implemented as a physical button or a touch panel and the like. Additionally, the input interface 1041 may display a driving state of the induction heating device 100.

For example, the input interface 1041 may be a thin film transistor liquid crystal display (TFT LCD) but not limited.

Light display areas 1042a, 1042b, 1042c may be formed on the upper surface of the cover plate 104. Light source units 1043a, 1043b, 1043c may be disposed below the cover plate 104, and light emitted from the light source units 1043a, 1043b, 1043c may be delivered to the user through the light display areas 1042a, 1042b, 1042c.

The working coil 106a, 106b, 106c, 106d, 106e may be a heating unit that heats an object to the heated, and may be disposed in the case 102.

The working coil 106a, 106b, 106c, 106d, 106e may include a wire that is wound multiple times in a ring shape, and may generate an AC magnetic field. Additionally, a mica sheet and a ferrite core may be consecutively disposed on a lower side of the working coil 106a, 106b, 106c, 106d, 106e.

The ferrite core may be fixed to the mica sheet through a sealant, and may diffuse the AC magnetic field generated by the working coil 106a, 106b, 106c, 106d, 106e. The mica sheet may be fixed to the working coil 106a, 106b, 106c, 106d, 106e and the ferrite core through a sealant, and may prevent a direct delivery of the heat, generated by the working coil 106a, 106b, 106c, 106d, 106e, to the ferrite core.

A plurality of working coils 106a, 106b, 106c, 106d, 106e may be provided. The plurality of working coils 106a, 106b, 106c, 106d, 106e may include a first working coil 106a disposed in a central portion of the case 102, a second working coil 106b and a third working coil 106c disposed on a right side of the first working coil 106a, and a fourth working coil 106d and a fifth working coil 106e disposed on a left side of the first working coil 106a. The second working coil 106b and the third working coil 106c may be disposed on the right side of the first working coil 106a in an up-down direction, and the fourth working coil 106d and the fifth working coil 106e may be disposed on the left side of the first working coil 106a in the up-down direction.

For example, the first working coil 106a may be a high-output dual heating coil, and the second working coil 106b, the third working coil 106c, the fourth working coil 106d and the fifth working coil 106e may be a single heating coil. The first working coil 106a as a dual heating coil has a heavy weight, and may have a maximum output of 7000 kW.

The induction heating device 100 according to one embodiment may perform the function of wireless power transmission based on the configurations and features described above.

Technologies for wirelessly supplying power have been developed and have been used for a wide range of electronic devices. A battery of an electronic device, to which the wireless power transmitting technology is applied, can be charged only by being placed on a charge pad without connecting to an additional charge connector. Accordingly, the electronic device, to which the wireless power transmitting technology is applied, requires no cord or no charger, thereby ensuring improved mobility and a reduced size and weight.

The wireless power transmitting technology can be broadly classified as an electromagnetic induction technology using a coil, a resonance technology using resonance, and a radio emission technology for converting electric energy into microwaves and delivering the microwaves, and the like. In the electromagnetic induction technology, power is transmitted using electromagnetic induction between a primary coil (e.g., a working coil) included in an apparatus for wirelessly transmitting power and a secondary coil included in an apparatus for wirelessly receiving power.

The theory of the induction heating technology of the induction heating device 100 is substantially the same as that of the electromagnetic induction-based wireless power transmission technology, in that an object to be heated is heated using electromagnetic induction. Accordingly, the induction heating device 100 according to one embodiment may perform the function of wireless power transmission as well as the function of induction heating.

The base plate 108a, 108b, 108c may be disposed in the case 102, e.g. at a middle end or middle portion of the case 102. That is, the base plate 108a, 108b, 108c may be disposed in the case 102 below the cover plate 104, and the plurality of working coils 106a, 106b, 106c, 106d, 106e may be disposed in an upper portion of or above or on the base plate 108a, 108b, 108c. The base plate 108a, 108b, 108c may support the plurality of working coils 106a, 106b, 106c, 106d, 106e that are heavy, and may help the plurality of working coils 106a, 106b, 106c, 106d, 106e to be mounted. The input interface 1041 and the light source units 1043a, 1043b, 1043c may be further disposed in the upper portion of the base plate 108a, 108b, 108c.

According to one embodiment, a plurality of base plates 108a, 108b, 108c may be provided.

In an example, the plurality of base plates 108a, 108b, 108c may include a first base plate 108a, a second base plate 108b, and a third base plate 108c.

The first base plate 108a, the second base plate 108b, and the third base plate 108c may be disposed at the middle end of the case 102 side by side to entirely cover a cross-sectional area of the case 102, i.e. the middle end of the case 102. That is, the first base plate 108a, the second base plate 108b, and the third base plate 108c may be disposed such that an edge or side of the third base plate 108c is in contact with or directly adjacent to one edge or side of the first base plate 108a and an edge or side of the second base plate 108b is in contact with or directly adjacent to the other edge or side of the first base plate 108a opposite to the one edge or side. Thus, the first base plate 108a may be disposed in between of the second base plate 108b and the third base plate 108c.

The first base plate 108a may be disposed in a central portion of the middle end of the case 102. The first working coil 106a may be disposed in an upper portion of or above or on the first base plate 108a.

The input interface 1041, and a first light source unit 1043a corresponding to the first working coil 106a may be further disposed in the upper portion of the first base plate 108a. The first base plate 108a may have a through hole A 1102 for installing the input interface 1041 and the first light source unit 1043a.

The second base plate 108b may be disposed on a right side of the first base plate 108a at the middle end of the case 102. The second working coil 106b and the third working coil 106c may be disposed in an upper portion of or above or on the second base plate 108b.

A second light source unit 1043b corresponding to the second working coil 106b and the third working coil 106c may be further disposed in the upper portion of the second base plate 108b. In the upper portion of the second base plate 108b, the second working coil 106b, the third working coil 106c and the second light source unit 1043b may be consecutively disposed. The second base plate 108b may have a through hole B 1202 for installing the second light source unit 1043b.

The third base plate 108c may be disposed on a left side of the first base plate 108a at the middle end of the case 102. The fourth working coil 106d and the fifth working coil 106e may be disposed in an upper portion of or above or on the third base plate108c.

A third light source unit 1043c corresponding to the fourth working coil 106d and the fifth working coil 106e may be further disposed in the upper portion of the third base plate108c. In the upper portion of the third base plate108c, the fourth working coil 106d, the fifth working coil 106e and the third light source unit 1043c may be consecutively disposed. The third base plate 108c may have a through hole C 1302 for installing the third light source unit 1043c.

The case 102 may have a plurality of mounting portions 1021 for mounting the plurality of base plates 108a, 108b, 108c at side surfaces of the case 102. Each of the plurality of mounting portions 1021 may have a shape bent inward from the side of the case 102. A height of the plurality of mounting portions 1021 may be the same with respect to a lower surface of the case 102. That is, edges of the plurality of base plates 108a, 108b, 108c may be mounted onto a top of the plurality of mounting portions 1021. Accordingly, the plurality of base plates 108a, 108b, 108c may be disposed at the middle end of the case 102.

The case 102 may include a bracket 1022 in a central portion of a lower surface (bottom surface) or of a lower end of the case 102. The bracket 1022 may be disposed in a central portion of a lower side of the first base plate 108a, and may prevent sagging of a lower surface of the first base plate 108a, caused by weight of the first base plate 108a. The weight of the first base plate 108a may include the weight of the first working coil 106a in the upper portion of the first base plate 108a. The second and third base plate 108c and 108b located at the outer sides of the electric range may be supported by the mounting portions 1021 respectively at two edges facing each other as well as along one edge connecting these two edges. However, the first base plate 108a located in the center of the electric range, i.e. between the second and third base plate 108b and 108c, may be supported by the mounting portions 1021 at two edges facing each other, while edges connecting said two edges remain unsupported. For this reason, it is advantageous to provide additional support of the first base plate 108a by means of the bracket 1022.

The bracket 1022 may include at least one elastic element 1025 on a top of the bracket 1022. For example, the elastic element 1025 may be a leaf spring. An upper end of at least one elastic element 1025 may contact the lower surface of the first base plate 108a, and may prevent sagging of the lower surface of the first base plate 108a.

The driving circuit 110a, 110b, 110c may control driving of the plurality of working coils 106a, 106b, 106c, 106d, 106e that are heating units, and may further control driving of components such as an input interface 1041 and the like of the induction heating device 100.

The driving circuit 110a, 110b, 110c may include various components in relation to the driving of the working coils 106a, 106b, 106c, 106d, 106e. The components may include a power supply configured to supply AC power, a rectifier configured to rectify AC power of the power supply into DC power, an inverter configured to convert DC power, rectified by the rectifier, into resonance current as a result of a switching operation and supply the resonance current to the working coil 106, a microcomputer (i.e., a micom) configured to control the inverter and components in relation to driving of the inverter, a relay or a semiconductor switch configured to turn on or turn off the working coils 106a, 106b, 106c, 106d, 106e, and the like.

The driving circuit 110a, 110b, 110c may include a first driving circuit 110a, a second driving circuit 110b, and a third driving circuit 110c. The first driving circuit 110a may be disposed on a right side of the lower end of the case 102 with respect to the bracket 1022 and may control driving of the first working coil 106a. The second driving circuit 110b may be disposed on the right side of the first driving circuit 110a and may control driving of the second working coil 106b and the third working coil 106c. The third driving circuit 110c may be disposed on a left side of the lower end of the case 102 with respect to the bracket 1022 and may control driving of the fourth working coil 106d and the fifth working coil 106e.

The heat sink 112a, 112b, 112c may be disposed over parts of the driving circuits 110a, 110b, 110c and may prevent an increase in temperatures of components disposed at the parts of the driving circuits 1 10a, 110b, 110c.

The heat sink 112a, 112b, 112c may include a first heat sink 112a, a second heat sink 112b, and a third heat sink 112c. The first heat sink 112a may prevent an increase in temperatures of components installed in a part of the first driving circuit 110a, the second heat sink 112b may prevent an increase in temperatures of components installed in a part of the second driving circuit 110b, and the third heat sink 112c may prevent an increase in temperatures of components installed in a part of the third driving circuit 110c.

The power feeder 114 may supply an external power source to the induction heating device 100. The power feeder 114 may be implemented as a terminal block.

The power feeder 114 may be disposed at any one of edges of the lower end of the case 102. For example, the power feeder 114 may be disposed at an upper end of the left side of the lower end of the case 102.

The filter circuit 116a, 116b, 116c may be disposed at any one of the edges of the lower end of the case 102, and may reduce noise made by the plurality of working coils 106a, 106b, 106c, 106d, 106e.

The filter circuit 116a, 116b, 116c may include a first filter circuit 116a, a second filter circuit 116b, and a third filter circuit 116c.

The first filter circuit 116a may reduce noise made by the first working coil 106a. The second filter circuit 116b may reduce noise made by the second working coil 106b and the third working coil 106c. The third filter circuit 116c may reduce noise made by the fourth working coil 106d and the fifth working coil 106e.

The air blowing fan 118a, 118b, 118c may reduce a temperature inside the case 102. Accordingly, the air blowing fan 118a, 118b, 118c may lower a temperature of various components installed in the driving circuits 110a, 110b, 110c.

The air blowing fan 118a, 118b, 118c may include a first air blowing fan 118a, a second air blowing fan 118b, and a third blow fan 118c.

The first air blowing fan 118a may cool various components installed in the first driving circuit 110a and may further cool the first light source unit 1043a and the input interface 1041. Particularly, the first air blowing fan 118a may deliver air (wind) for cooling to the first heat sink 112a over the first driving circuit 110a.

The second air blowing fan 118b may cool various components installed in the second driving circuit 110b and may further cool the second light source unit 1043b. Particularly, the second air blowing fan 118b may deliver air for cooling to the second heat sink 112b over the second driving circuit 110b.

The third air blowing fan 118c may cool various components installed in the third driving circuit 110c and may further cool the third light source unit 1043c. Particularly, the third air blowing fan 118c may deliver air for cooling to the third heat sink 112c over the third driving circuit 110c.

The air blowing fans 118a, 118b, 118c may not include a structure for preventing a foreign substance from contacting the air blowing fans 118a, 118b, 118c.

The air guide 120a, 120b, 120c may guide air generated by the air blowing fans 118a, 118b, 118c.

The air guide 120a, 120b, 120c may include a first air guide 120a, a second air guide 120b and a third guide 120c.

The first air guide 120a may be disposed to encircle the first heat sink 112a installed in a part of the first driving circuit 110a and may guide (deliver) air, output from the first air blowing fan 118a, to the first heat sink 112a.

The second air guide 120b may be disposed to encircle the second heat sink 112b installed in a part of the second driving circuit 110b and may guide air, output from the second air blowing fan 118b, to the second heat sink 112b.

The third air guide 120c may be disposed to encircle the third heat sink 112c installed in a part of the third driving circuit 110c and may guide air, output from the third air blowing fan 118c, to the third heat sink 112c.

The induction heating device 100 according to one embodiment has the configurations and features described above. Below, detailed description of prevention of a bend of the base plate 108a, 108b, 108c is provided.

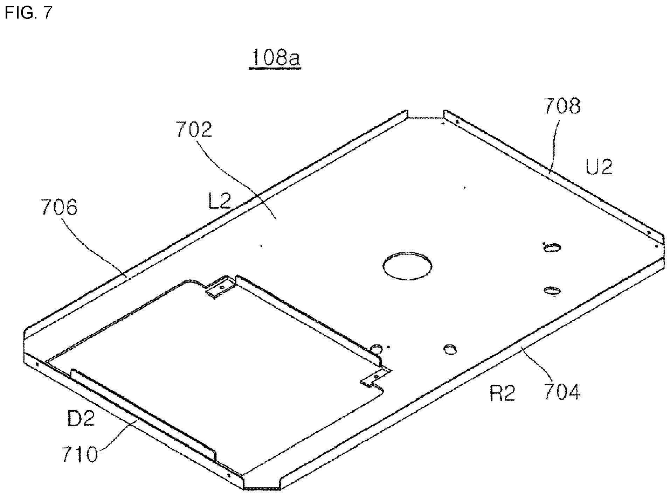

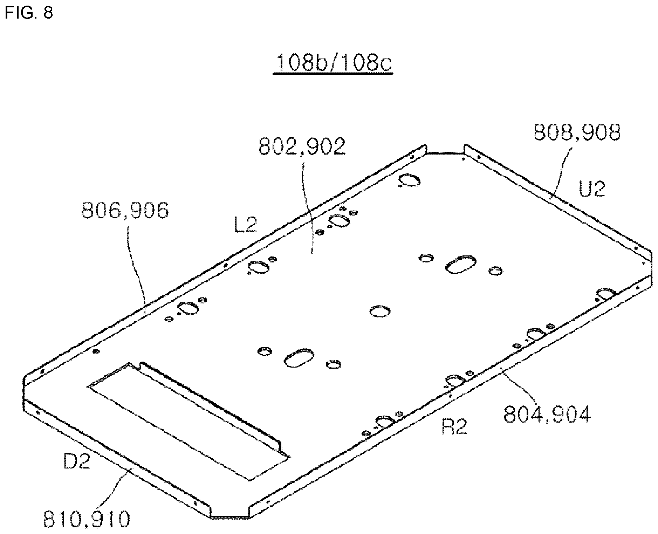

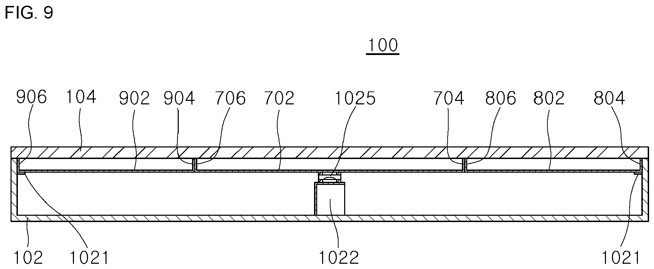

FIG. 7 is a perspective view showing a first base plate 108a according to a first embodiment. FIG. 8 is a perspective view showing a second base plate 108b and a third base plate 108c according to the first embodiment. FIG. 9 is a cross-sectional view showing a base plate 108a, 108b, 108c disposed in a case 102, according to the first embodiment.

The base plate 108a, 108b, 108c illustrated in FIGS. 7 to 9 may have the same shape as the base plate 108a, 108b, 108c described with reference to FIGS. 3 to 5. Referring to FIG. 8, the second base plate 108b and the third base plate 108c may have the same shape.

Referring to FIGS. 7 to 9, the base plate 108a, 108b, 108c according to the first embodiment may include a flat plate 702, 802, 902 and a plurality of bent portions 704, 706, 708, 710, 804, 806, 808, 810, 904, 906, 908, 910.

A right (or first) bent portion 704, 804, 904 of the base plate 108a, 108b, 108c may be bent at a right (or first) edge R2 of the flat plate 702, 802, 902, a left (or second) bent portion 706, 806, 906 of the base plate 108a, 108b, 108c may be bent at a left (or second) edge L2 of the flat plate 702, 802, 904, an upper (or third) bent portion 708, 808, 908 of the base plate 108a, 108b, 108c may be bent at an upper (or third) edge U2 of the flat plate 702, 802, 902, and a lower (or fourth) bent portion 710, 810, 910 of the base plate 108a, 108b, 108c may be bent at a lower (or fourth) edge D2 of the flat plate 702, 802, 902. In this case, the plurality of bent portions 704, 706, 708, 710, 804, 806, 808, 810, 904, 906, 908, 910 may serve as a strength line. Accordingly, strength of the base plate 108a, 108b, 108c may be improved.

According to another embodiment, one or more bent portions among the plurality of bent portions 704, 706, 708, 710, 804, 806, 808, 810 may not be provided.

According to one embodiment, the plurality of bent portions 704, 706, 708, 710, 804, 806, 808, 810, 904, 906, 908, 910 of the base plate 108a, 108b, 108c may be bent upward, i.e. in a direction opposite to the gravity direction, that is towards the cover plate 104. That is, the flat plate 702, 804, 904 may have a flat shape and the plurality of bent portions 704, 706, 708, 710, 804, 806, 808, 810, 904, 906, 908, 910 may be bent at an angle, e.g. of 90°, in a direction opposite to the gravity direction, but not limited. Alternatively, the plurality of bent portions 704, 706, 708, 710, 804, 806, 808, 810, 904, 906, 908, 910 may be bent downward, i.e. in the direction of gravity, that is in a direction away from the cover plate 104.

Referring to FIG. 4 and FIGS. 7 to 9, an upper edge U2 of the first base plate 108a may be mounted onto a mounting portion 1021 formed on an upper side surface (i.e. first side surface) U1 of the case 102, and an upper bent portion 708 of the first base plate 108a may be disposed near the upper side surface U1 of the case 102. A lower edge D2 of the first base plate 108a may be mounted onto a mounting portion1021 formed on a lower side surface (i.e. second side surface) D1 of the case 102, and a lower bent portion 710 of the first base plate 108a may be disposed near the lower side surface D1 of the case 102. Here, the upper side surface U1 of the case 102 and the lower side surface D1 of the case 102 are opposite to each other, i.e. face each other.

An upper edge U2 of the second base plate 108b may be mounted onto a mounting portion 1021 formed on the upper side surface U1 of the case 102, and an upper bent portion 808 of the second base plate 108b may be disposed near the upper side surface U1 of the case 102. A lower edge D2 of the second base plate 108b may be mounted onto a mounting portion 1021 formed on the lower side surface D1 of the case 102, and a lower bent portion 810 of the second base plate 108b may be disposed near the lower side surface D1 of the case 102. A right edge R2 of the second base plate 108b may be mounted onto a mounting portion 1021 formed on a right side surface (i.e. third side surface) R1 of the case 102, and a right bent portion 806 of the second base plate 108b may be disposed near the right side surface R1 of the case 102.

The mounting portion 1021 onto which the upper edge U2 of the second base plate 108b is mounted may be the same as the mounting portion 1021 onto which the upper edge U2 of the first base plate 108a is mounted, and the mounting portion 1021 onto which the lower edge D2 of the second base plate 108b is mounted may be the same as the mounting portion 1021 onto which the lower edge D2 of the first base plate 108a is mounted. Accordingly, the first base plate 108a and the second base plate 108b may be disposed in the case 102 at the same height.

An upper edge U2 of the third base plate 108c may be mounted onto a mounting portion 1021 formed on the upper side surface U1 of the case 102, and an upper bent portion 908 of the third base plate 108c may be disposed near the upper side surface U1 of the case 102. A lower edge D2 of the third base plate 108c may be mounted onto a mounting portion 1021 formed on the lower side surface D1 of the case 102, and a lower bent portion 910 of the third base plate 108c may be disposed near the lower side surface D1 of the case 102. A left edge L2 of the third base plate 108c may be mounted onto a mounting portion 1021 formed on a left side surface (i.e. fourth side surface) L1 of the case 102, and a left bent portion 906 of the third base plate 108c may be disposed near the left side surface L1 of the case 102.

The mounting portion 1021 onto which the upper edge U2 of the third base plate 108c is mounted may be the same as the mounting portion 1021 onto which the upper edge U2 of the first base plate 108a is mounted, and the mounting portion 1021 onto which the lower edge D2 of the third base plate 108c is mounted may be the same as the mounting portion 1021 onto which the lower edge D2 of the first base plate 108a is mounted. Accordingly, the first base plate 108a and the third base plate 108c may be disposed in the case 102 at the same height. Since the height of the plurality of mounting portions 1021 is the same, the first base plate 108a, the second base plate 108b and the third base plate 108c may be disposed in the case 102 at the same height by the plurality of mounting portions 1021.

A right edge R2 of the first base plate 108a may be disposed near a left edge L2 of the second base plate 108b, and a right bent portion 704 of the first base plate 108a may be disposed to face a left bent portion 806 of the second base plate 108b. A left edge L2 of the first base plate 108a may be disposed near a right edge R2 of the third base plate 108c, and a left bent portion 706 of the first base plate 108a may be disposed to face a right bent portion 904 of the third base plate 108c.

In summary, the induction heating device 100 according to the first embodiment may use a plurality of divided base plates 108a, 108b, 108c instead of using a single base plate, to mount the working coils 106a, 106b, 106c, 106d, 106e. Since a large-sized base plate has less strength than a small-sized base plate, the induction heating device 100 according to the present disclosure may prevent sagging of the base plate 108a, 108b, 108c. As a result of prevention of the sagging of the base plate 108a, 108b, 108c, heat generated by the working coil 106a, 106b, 106c, 106d, 106e may be effectively delivered to the cover plate 104.

In the induction heating device 100 according to the first embodiment, ends of the base plate 108a, 108b, 108c may be bent upward. The bent ends of the base plate 108a, 108b, 108c, i.e., the bent portions 704, 706, 708, 710, 804, 806, 808, 810, 904, 906, 908, 910, may serve as a strength line for the flat plate 702, 802, 902.

In other words, the plurality of bent portions 704, 706, 708, 710, 804, 806, 808, 810, 904, 906, 908, 910 may be formed at the edges or ends of the flat plate 702, 802, 902 of the base plate 108a, 108b, 108c, and at least a part of one or more bent portions among the plurality of bent portions 704, 706, 708, 710, 804, 806, 808, 810, 904, 906, 908, 910 may be disposed to contact an inner surface of the case 102. In a base plate A and a base plate B adjacent to each other among the base plates 108a, 108b, 108c, a bent portion of the base plate A and a bent portion of the base plate B may be disposed to at least partially contact each other. In this case, the bent portion of the base plate A and the bent portion of the base plate B may be bent portions formed between the base plate A and the base plate B. Since each of the bent portions 704, 706, 708, 710, 804, 806, 808, 810, 904, 906, 908, 910 may contact the inner surface of the case 102 or another bent portion, the strength of the base plate 108a, 108b, 108c may improve, and the sagging of the base plate 108a, 108b, 108c may be further prevented.

According to the present disclosure, since the plurality of base plates 108a, 108b, 108c are used, the induction heating device 100 may be readily manufactured and assembled. That is, when a single base plate is disposed in a case 102, it is not easy to assemble an induction heating device due to weight of the single base plate. However, according to the present disclosure, since a plurality of lightweight base plates 108a, 108b, 108c may be used, the induction heating device 100 may be readily assembled.

Additionally, in the induction heating device 100 according to the present disclosure, no additional work for improving the strength of the plurality of base plates 108a, 108b, 108c is required. That is, according to the present disclosure, the strength of the plurality of base plates 108a, 108b, 108c may improve without adding a rib, a bead and the like for improving strength.

Further, in the induction heating device 100 according to the present disclosure, the plurality of base plates 108a, 108b, 108c may be disposed side by side to cover an entire surface area of the case 102. Accordingly, noise between the working coils 106a, 106b, 106c, 106d, 106e and electronic components disposed below the plurality of base plates 108a, 108b, 108c may be completely blocked. Furthermore, since the electronic components may be freely disposed, a size of the case 102 may be reduced, and a small-sized induction heating device 100 may be manufactured. As a result, a space for installing the induction heating device 100 may be reduced.

The bracket 1022, as described above, may be disposed in the central portion of the lower end of the case 102.

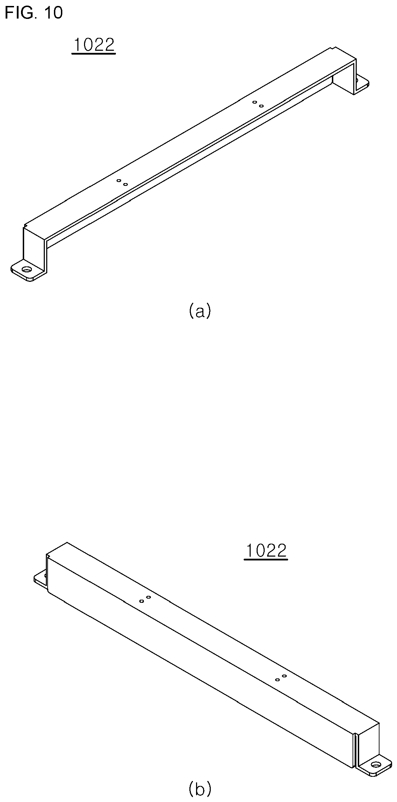

FIG. 10 is perspective views showing a bracket 1022 according to one embodiment.

Referring to FIG. 10, a lower surface of the bracket 1022 may be screw-coupled to the lower surface of the case 102. An upper surface of the bracket 1022 may have a flat shape, a left surface of the bracket 1022 may have a shape that is bent at the upper surface of the bracket 1022 and a right surface of the bracket 1022 may have an open shape, but not be limited. The left surface and right surface of the bracket 1022 may have a shape that is bent at the upper surface of the bracket 1022, and the left surface and right surface of the bracket 1022 may have an open shape.

The bracket 1022 may be disposed in the central portion of the lower side of the first base plate 108a and may support the first base plate 108a.

The bracket 1022 may have at least one elastic element 1025 on the upper surface thereof. An upper end of at least one elastic element 1025 may contact the lower surface of the first base plate 108a. Depending on elastic properties, the elastic element 1025 may further support the first base plate 108a.

In summary, since the induction heating device 100 according to the first embodiment is provided with the bracket 1022 and at least one elastic element 1025, sagging of the first base plate 108a may be further prevented.

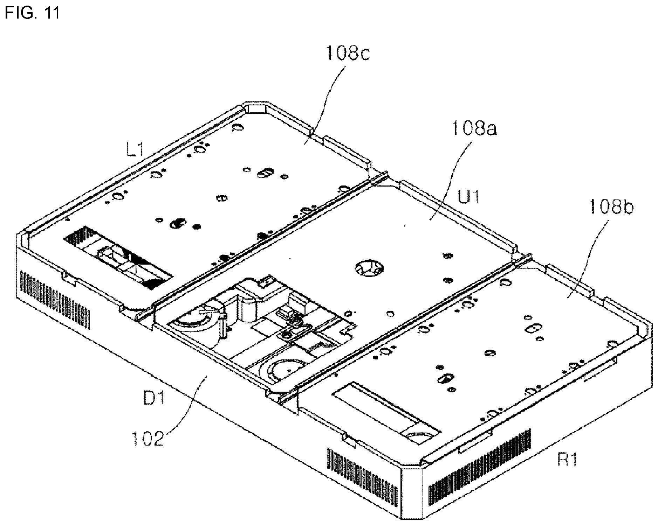

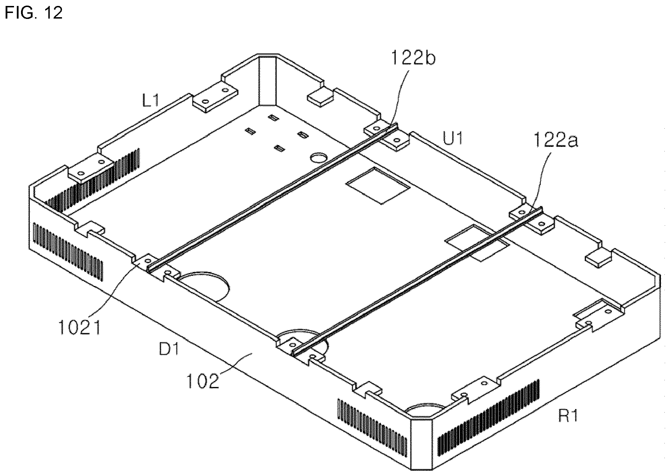

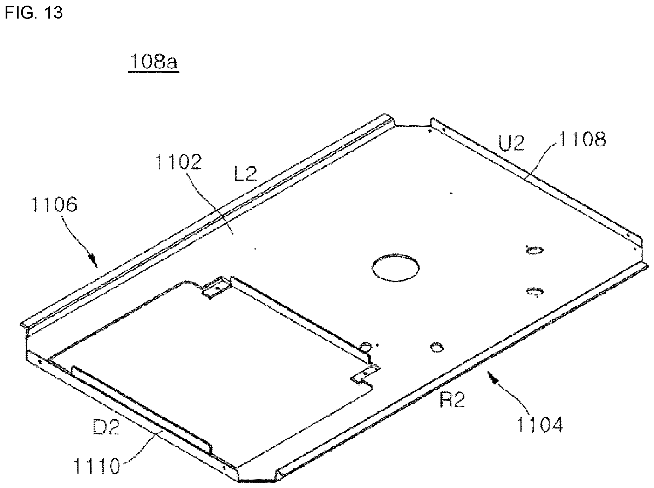

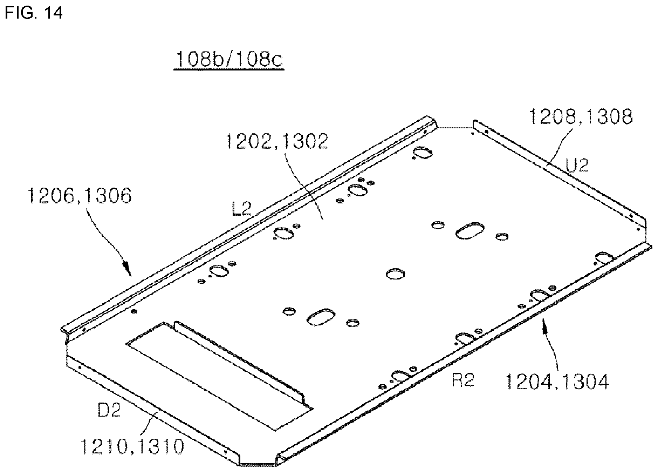

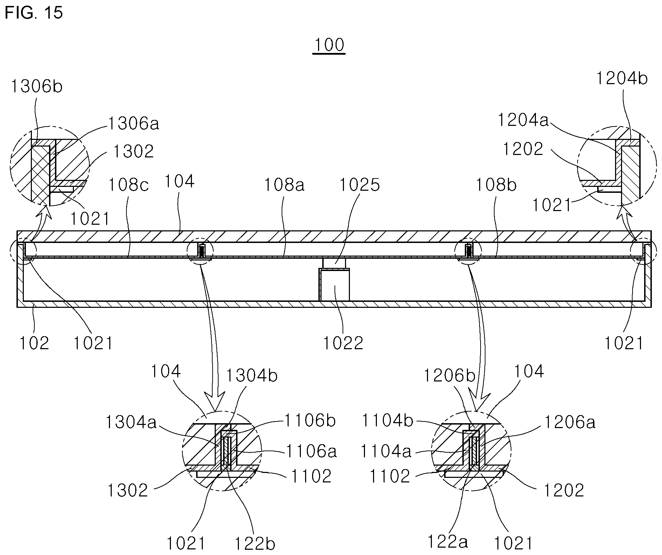

FIG. 11 is a perspective view showing a case 102 in which a base plate 108a, 108b, 108c according to a second embodiment is disposed. FIG. 12 is a perspective view showing a case 102 in which a reinforcement beam 122a, 122b is disposed, according to the second embodiment. FIG. 13 is a perspective view showing a first base plate 108a according to the second embodiment. FIG. 14 is a perspective view showing a second base plate 108b and a third base plate 108c according to the second embodiment. FIG. 15 is a cross-sectional view showing a base plate 108a, 108b, 108c disposed in a case 102, according to the second embodiment. Referring to FIG. 14, the second base plate 108b and the third base plate 108c may have the same shape.

Referring to FIGS. 11 to 15, the base plate 108a, 108b, 108c according to the second embodiment may include a flat plate 1102, 1202, 1302 and a plurality of bent portions 1104, 1106, 1108, 1110, 1204, 1206, 1208, 1210, 1304, 1306, 1308, 1310.

An upper (or first) bent portion 1108, 1208, 1308 of the base plate 108a, 108b, 108c may be bent at an upper (or first) edge U2 of the flat plate 1102, 1202, 1302, and a lower (or second) bent portion 1110, 1210, 1310 of the base plate 108a, 108b, 108c may be bent at a lower (or second) edge D2 of the flat plate 1102, 1202, 1302. The upper bent portion 1108, 1208, 1308 and lower bent portion 1110, 1210, 1310 of the base plate 108a, 108b, 108c according to the second embodiment may be the same as the upper bent portion 708, 808, 908 and lower bent portion 710, 810, 910 of the base plate 108a, 108b, 108c according to the first embodiment. Accordingly, detailed description in relation to this is omitted. Alternatively, the upper bent portion 1108, 1208, 1308 and lower bent portion 1110, 1210, 1310 of the base plate 108a, 108b, 108c according to the second embodiment may have a stepped shape configuration like a left (or third) bent portion 1104, 1204, 1304 and a right (or fourth) bent portion 1106, 1206, 1306 described here below.

A left (or third) bent portion 1104, 1204, 1304 and a right (or fourth) bent portion 1106, 1206, 1306 of the base plate 108a, 108b, 108c may be bent in a stepped shape, e.g. in a Z shape or an inverse Z shape. The left bent portion 1104, 1204, 1304 and the right bent portion 1106, 1206, 1306 may have the same shape, but mirrored with respect to a vertical line. For example, the left bent portion 1104, 1204, 1304 of the base plate 108a, 108b, 108c may be bent in a Z shape, and the right bent portion 1106, 1206, 1306 of the base plate 108a, 108b, 108c may be bent in an inverse Z shape.

Specifically, referring to FIGS. 11, 13, 14 and 15, the first base plate 108a may include a first flat plate 1102, a (1-1)th bent portion 1104a, a (1-2)th bent portion 1104b, a (1-3)th bent portion 1106a, and a (1-4)th bent portion 1106b. The (1-1)th bent portion 1104a and (1-2)th bent portion 1104b may correspond to the right bent portion 1104 of the first base plate 108a, and the (1-3)th bent portion 1106a and (1-4)th bent portion 1106b may correspond to the left bent portion 1106 of the first base plate 108a.

One end of the bent portion 1104a may be bent at a right end of the first flat plate 1102, e.g., at an angle of 90°, and one end of the (1-2)th bent portion 1104b may be bent at the other end of the (1-1)th bent portion 1104a, e.g., at angle of 90°. Accordingly, the right end of the first flat plate 1102, and the (1-1)th bent portion 1104a and the (1-2)th bent portion 1104b may have an inverse Z shape.

One end of the bent portion 1106a may be bent at a left end of the first flat plate 1102, e.g., at an angle of 90°, and one end of the (1-4)th bent portion 1106b may be bent at the other end of the (1-3)th bent portion 1106a, e.g., at an angle of 90°. Accordingly, the left end of the first flat plate 1102, and the (1-3)th bent portion 1106a and the (1-4)th bent portion 1106b may have a Z shape.

Additionally, the second base plate 108b may include a second flat plate 1202, a (2-1)th bent portion 1204a, a (2-2)th bent portion 1204b, a (2-3)th bent portion 1206a, and a (2-4)th bent portion 1206b. The (2-1)th bent portion 1204a and (2-2)th bent portion 1204b may correspond to the right bent portion 1204 of the second base plate 108b, and the (2-3)th bent portion 1206a and (2-4)th bent portion 1206b may correspond to the left bent portion 1206 of the second base plate 108b.

One end of the (2-1)th bent portion 1204a may be bent at a right end of the second flat plate 1202, e.g., at an angle of 90°, and one end of the (2-2)th bent portion 1204b may be bent at the other end of the (2-1)th bent portion 1204a, e.g., at angle of 90°. Accordingly, the right end of the second flat plate 1202, and the (2-1)th bent portion 1204a and the (2-2)th bent portion 1204b may have an inverse Z shape.

One end of the (2-3)th bent portion 1206a may be bent at a left end of the second flat plate 1202, e.g., at an angle of 90°, and one end of the (2-4)th bent portion 1206b may be bent at the other end of the (2-3)th bent portion 1206a, e.g., at angle of 90°. Accordingly, the left end of the second flat plate 1202, and the (2-3)th bent portion 1206a and the (2-4)th bent portion 1206b may have a Z shape.

Further, the third base plate 108c may include a third flat plate 1302, a (3-1)th bent portion 1304a, a (3-2)th bent portion 1304b, a (3-3)th bent portion 1306a, and a (3-4)th bent portion 1306b. The (3-1)th bent portion 1304a and (3-2)th bent portion 1304b may correspond to the right bent portion 1304 of the third base plate 108c, and the (3-3)th bent portion 1306a and (3-4)th bent portion 1306b may correspond to the left bent portion 1306 of the third base plate 108c.

One end of the (3-1)th bent portion 1304a may be bent at a right end of the third flat plate 1302, e.g., at an angle of 90°, and one end of the (3-2)th bent portion 1304b may be bent at the other end of the (3-1)th bent portion 1304a, e.g., at angle of 90°. Accordingly, the right end of the third flat plate 1302, and the (3-1)th bent portion 1304a and the (3-2)th bent portion 1304b may have an inverse Z shape.

One end of the (3-3)th bent portion 1306a may be bent at a left end of the third flat plate 1302, e.g., at an angle of 90°, and one end of the (3-4)th bent portion 1306b may be bent at the other end of the (3-3)th bent portion 1306a, e.g., at angle of 90°. Accordingly, the left end of the third flat plate 1302, and the (3-3)th bent portion 1306a and the (3-4)th bent portion 1306b may have a Z shape.

The bent portion 1104a and the (2-3)th bent portion 1206a may be disposed in parallel, and the (2-4)th bent portion 1206b may be mounted onto the (1-2)th bent portion 1104b but not limited. Alternatively, the (1-2)th bent portion 1104b may be mounted onto the (2-4)th bent portion 1206b.

The bent portion 1106a and the (3-1)th bent portion 1304a may be disposed in parallel, and the (3-2)th bent portion 1304b may be mounted onto the (1-4)th bent portion 1106b but not limited. Alternatively, the (1-4)th bent portion 1106b may be mounted onto the (3-2)th bent portion 1304b.

The (2-1)th bent portion 1204a may be disposed to face the right side surface R1 of the case 102, and the (2-2)th bent portion 1204b may be mounted onto the right side surface R1 of the case 102. The (3-3)th bent portion 1306a may be disposed to face the left side surface L1 of the case 102, and the (3-4)th bent portion 1306b may be mounted onto the left side surface L1 of the case 102.

The right bent portion 1204 of the second base plate 108b may only include the (2-1)th bent portion 1204a, and the left bent portion 1306 of the third base plate 108c may only include the (3-3)th bent portion 1306a.

In summary, the induction heating device 100 according to the second embodiment has the same features as the induction heating device 100 according to the first embodiment. The features are described as follows. The plurality of base plates 108a, 108b, 108c may be provided to prevent the sagging of the base plate 108a, 108b, 108c, the ends of the base plate 108a, 108b, 108c may be bent to further prevent the sagging of the base plate 108a, 108b, 108c, the plurality of lightweight base plates 108a, 108b, 108c may be used to help readily manufacture and assemble the induction heating device 100, additional work for improving strength of the plurality of base plates 108a, 108b, 108c may not be required, and noise between the working coil 106a, 106b, 106c, 106d, 106e and the electronic components below the plurality of base plates 108a, 108b, 108c may be completely blocked.

Additionally, in the induction heating device 100 according to the second embodiment, the right and left ends of the base plate 108a, 108b, 108c may be disposed in a Z shape or an inverse Z shape. In this case, the structures of the right and left ends may allow the base plates 108a, 108b, 108c to complement and support one another. Thus, the sagging of the base plate 108a, 108b, 108c may be further prevented, and the base plates 108a, 108b, 108c may be stably mounted onto the case.

The induction heating device 100 according to the second embodiment may include the first reinforcement beam 122a and the second reinforcement beam 122b. One end of the first reinforcement beam 122a and the second reinforcement beam 122b may connect to the upper side surface U1 of the case 102, and the other end of the first reinforcement beam 122a and the second reinforcement beam 122b may connect the lower side surface D1 of the case 102. For example, one end of the first reinforcement beam 122a and the second reinforcement beam 122b may be screw-coupled to the mounting portion 1021 formed on the upper side surface U1 of the case 102, and the other end of the first reinforcement beam 122a and the second reinforcement beam 122b may be screw-coupled to the mounting portion 1021 formed on the lower side surface D1 of the case 102.

The first reinforcement beam 122a may be disposed between the (1-1)th bent portion 1104a and the (2-3)th bent portion 1206a, and an upper end of the first reinforcement beam 122a may contact a lower portion of the (1-2)th bent portion 1104b. When the (1-2)th bent portion 1104b is mounted onto the (2-4)th bent portion 1206b, the upper end of the first reinforcement beam 122a may contact a lower portion of the (2-4)th bent portion 1206b. The first reinforcement beam 122a may have a " 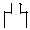 " shape.

The second reinforcement beam 122b may be disposed between the (1-3)th bent portion 1106a and the (3-1)th bent portion 1304a, and an upper end of the second reinforcement beam 122b may contact a lower portion of the (1-4)th bent portion 1106b. When the (1-4)th bent portion 1106b is mounted onto the (3-2)th bent portion 1304b, the upper end of the second reinforcement beam 122b may contact a lower portion of the (3-2)th bent portion 1304b. The second reinforcement beam 122b may have a " 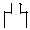 " shape.

To sum up, in the induction heating device 100 according to the second embodiment, the reinforcement beam 122a, 122b may be disposed between the ends of each of the base plates 108a, 108b, 108c, and may support the bent portions. Thus, the sagging of the base plates 108a, 108b, 108c may be further prevented.

The embodiments are described above with reference to a number of illustrative embodiments thereof. However, the present disclosure is not intended to limit the embodiments and drawings set forth herein, and numerous other modifications and embodiments can be devised by one skilled in the art without departing from the technical idea of the disclosure. Further, the effects and predictable effects based on the configurations in the disclosure are to be included within the range of the disclosure though not explicitly described in the description of the embodiments.

## Claims

1. An electric range, comprising:
a case (102);
a cover plate (104) coupled to the case (102), for placing an object to be heated on the cover plate (104);
a plurality of heating units (106a, 106b, 106c, 106d, 106e) accommodated in the case (102) and disposed below the cover plate (104); and
a plurality of base plates (108a, 108b, 108c) disposed in the case (102), the plurality of heating units (106a, 106b, 106c, 106d, 106e) being provided on the plurality of base plates (108a, 108b, 108c);
wherein the base plates (108a, 108b, 108c) are disposed side by side to cover a cross-sectional area of the case (102);
**characterized in that**:
the base plates (108a, 108b, 108c) are disposed in contact with each other.

2. The electric range of claim 1, wherein each of the plurality of base plates (108a, 108b, 108c) includes a flat plate (702, 802, 902) and at least one bent portion (704, 706, 708, 710, 804, 806, 808, 810) formed at an end of the flat plate (702, 802, 902).

3. The electric range of claim 2, wherein at least a part of one of the at least one bent portion (708, 710, 808, 810, 908, 910) is disposed in contact with a side surface of the case (102).

4. The electric range of claim 2 or 3, wherein each of the plurality of the base plates (108a, 108b, 108c) includes a bent portion (704, 706, 806, 904) in contact with and/or coupled to a bent portion (704, 706, 806, 904) of an adjacent base plate (108a, 108b, 108c).

5. The electric range according to any one of the preceding claims 2, 3 or 4, wherein the at least one bent portion (704, 706, 708, 710, 804, 806, 808, 810) extends from the flat plate (702, 802, 902) in vertical direction.

6. The electric range according to any one of the preceding claims, wherein the plurality of base plates (108a, 108b, 108c) includes a first base plate (108a), a second base plate (108b) and a third base plate (108c) arranged one after the other along a straight line.

7. The electric range according to any one of the preceding claims, wherein at least one of the plurality of base plates (108a, 108b, 108c) includes a flat plate (702), a first bent portion (1104a) extending from said flat plate in vertical direction, and a second bent portion (1104b) extending from the first bent portion (1104a) in horizontal direction such that the flat plate, the first bent portion (1 104a) and the second bent portion (1104b) form a stepped shape or a Z shape.

8. The electric range of claim 7, wherein the second bent portion (1104b) extends from the first bent portion (1104a) in a direction away from the flat plate and/or in a direction towards an adjacent base plate (108a, 108b, 108c).

9. The electric range of claim 7 or 8, wherein first bent portions (1104a, 1206a) formed at neighboring edges of adjacent base plates (108a, 108b) have surfaces extending in parallel to each other, and/or
wherein second bent portions (1104b, 1206b) formed at neighboring edges of adjacent base plates (108a, 108b) are overlapping one another.

10. The electric range of claim 7, 8 or 9, further comprising:
a reinforcement beam (122a, 122b) connecting two opposite side surfaces (U1, D1) of the case (102),
wherein the reinforcement beam (122a, 122b) is disposed between first bent portions (1104a, 1206a) formed at neighboring edges of adjacent base plates (108a, 108b), and/or supports at least one of the second bent portions (1104b, 1204d) formed at neighboring edges of adjacent base plates (108a, 108b).

11. The electric range according to any one of the preceding claims 7 to 10, wherein the first bent portion (1204a, 1304a) of at least one of the base plates (108b, 108c) is in surface contact with a side surface of the case (102) and/or
wherein the second bent portion (1204a, 1304a) of at least one of the base plates (108b, 108c) bears on an upper end of a side surface of the case (102).

12. The electric range according to any one of the preceding claims 7 to 11, wherein a first base plate (108a) includes a first flat plate (702), a (1-1)th bent portion (1104a), a (1-2)th bent portion (1104b), a (1-3)th bent portion (1106a) and a (1-4)th bent portion (1106b), the (1-1)th bent portion (1104a) extending at an angle from a first end of the first flat plate (702), and the (1-2)th bent portion (1104b) extending at an angle from the (1-1)th bent portion (1104a), such that the first flat plate (702), the (1-1)th bent portion (1104a) and the (1-2)th bent portion (1104b) form a stepped shape or a Z shape and
the (1-3)th bent portion (1 106a) extending at an angle from a second end of the first flat plate (702) being opposite to the first end, and the (1-4)th bent portion (1106b) extending at an angle from the (1-3)th bent portion (1106a), such that the first flat plate (702), the (1-3)th bent portion (1 106a) and the (1-4)th bent portion (1 106b) form a stepped shape or a Z shape.

13. The electric range of claim 12, further comprising a second base plate (108b) and a third base plate (108c) disposed at opposite sides of the first base plate (108a),
wherein the second base plate (108b) includes a second flat plate (802), a (2-3)th bent portion (1206a), and a (2-4)th bent portion (1204d),
the (2-3)th bent portion (1206a) extending at an angle from a first end of the second flat plate (802), and the (2-4)th bent portion (1204d) extending at an angle from the (2-3)th bent portion (1206a), such that the second flat plate (802), the (2-3)th bent portion (1206a) and the (2-4)th bent portion (1204d) form a stepped shape or a Z shape, and
wherein the third base plate (108c) includes a third flat plate (902), a (3-1)th bent portion (1304a), and a (3-2)th bent portion (1304b),
the (3-1)th bent portion (1304a) extending at an angle from a first end of the third flat plate (902), and the (3-2)th bent portion (1304b) extending at an angle from the (3-1)th bent portion (1304a), such that the third flat plate (902), the (3-1)th bent portion (1304a) and the (3-2)th bent portion (1304b) form a stepped shape or a Z shape,
wherein the (1-1)th bent portion (1104a) and the (2-3)th bent portion (1206a) are disposed in parallel, and the (1-2)th bent portion (1104b) and the (2-4)th bent portion (1204d) are mounted one on the other, and
wherein the (1-3)th bent portion (1106a) and the (3-1)th bent portion (1304a) are disposed in parallel, and the (1-4)th bent portion (1106b) and the (3-2)th bent portion (1304b) are mounted one on the other.

14. The electric range of claim 13,
wherein the second base plate (108b) further includes a (2-1)th bent portion (1204a) and a (2-2)th bent portion (1204b),
the (2-1)th bent portion (1204a) extending at an angle from a second end of the second flat plate (802), and the (2-2)th bent portion (1204b) extending at an angle from the (2-1)th bent portion (1204a), such that the second flat plate (802), the (2-1)th bent portion (1204a) and the (2-2)th bent portion (1204b) form a stepped shape or a Z shape, and
wherein the (2-2)th bent portion (1204b) is mounted onto an upper end of a side surface (R1) of the case (102); and
wherein the third base plate (108c) further includes a (3-3)th bent portion (1304c) and a (3-4)th bent portion (1304d),
the (3-3)th bent portion (1304c) extending at an angle from a second end of the third flat plate (902), and the (3-4)th bent portion (1304d) extending at an angle from the (3-3)th bent portion (1304c), such that the third flat plate (902), the (3-3)th bent portion (1304c) and the (3-4)th bent portion (1304d) form a stepped shape or a Z shape, and
wherein the (3-4)th bent portion (1304d) is mounted onto an upper end of a side surface (L1) of the case (102).

15. The electric range according to any one of the preceding claims, wherein the case (102) includes mounting portions (1021) extending from side surfaces of the case (102) towards an interior thereof, for supporting the base plates (108a, 108b, 108c).

## Patentansprüche

1. Elektroherd, der Folgendes umfasst:
ein Gehäuse (102);
eine Abdeckplatte (104), die mit dem Gehäuse (102) gekoppelt ist, zum Platzieren eines Objekts, das erhitzt werden soll, auf der Abdeckplatte (104);
mehrere Heizeinheiten (106a, 106b, 106c, 106d, 106e), die im Gehäuse (102) aufgenommen sind und unter der Abdeckplatte (104) angeordnet sind; und
mehrere Basisplatten (108a, 108b, 108c), die im Gehäuse (102) angeordnet sind, wobei die mehreren Heizeinheiten (106a, 106b, 106c, 106d, 106e) auf den mehreren Basisplatten (108a, 108b, 108c) vorgesehen sind;
wobei die Basisplatten (108a, 108b, 108c) nebeneinander angeordnet sind, um eine Querschnittsfläche des Gehäuses (102) zu bedecken;
**dadurch gekennzeichnet, dass**
die Basisplatten (108a, 108b, 108c) in Kontakt miteinander angeordnet sind.

2. Elektroherd nach Anspruch 1, wobei jede der mehreren Basisplatten (108a, 108b, 108c) eine flache Platte (702, 802, 902) und wenigstens einen gebogenen Abschnitt (704, 706, 708, 710, 804, 806, 808, 810), der an einem Ende der flachen Platte (702, 802, 902) ausgebildet ist, umfasst.

3. Elektroherd nach Anspruch 2, wobei wenigstens ein Teil eines des wenigstens einen gebogenen Abschnitts (708, 710, 808, 810, 908, 910) in Kontakt mit einer Seitenfläche des Gehäuses (102) angeordnet ist.

4. Elektroherd nach Anspruch 2 oder 3, wobei jede der mehreren Basisplatten (108a, 108b, 108c) einen gebogenen Abschnitt (704, 706, 806, 904) in Kontakt mit einem gebogenen Abschnitt (704, 706, 806, 904) einer angrenzenden Basisplatte (108a, 108b, 108c) umfasst und/oder damit gekoppelt ist.

5. Elektroherd nach einem der vorhergehenden Ansprüche 2, 3 oder 4, wobei sich der wenigstens eine gebogene Abschnitt (704, 706, 708, 710, 804, 806, 808, 810) von der flachen Platte (702, 802, 902) in vertikaler Richtung erstreckt.

6. Elektroherd nach einem der vorhergehenden Ansprüche, wobei die mehreren Basisplatten (108a, 108b, 108c) eine erste Basisplatte (108a), eine zweite Basisplatte (108b) und eine dritte Basisplatte (108c) umfassen, die längs einer geraden Linie nacheinander angeordnet sind.

7. Elektroherd nach einem der vorhergehenden Ansprüche, wobei wenigstens eine der mehreren Basisplatten (108a, 108b, 108c) eine flache Platte (702), einen ersten gebogenen Abschnitt (1104a), der sich von der flachen Platte in vertikaler Richtung erstreckt, und einen zweiten gebogenen Abschnitt (1104b), der sich vom ersten gebogenen Abschnitt (1104a) in horizontaler Richtung erstreckt, umfasst, so dass die flache Platte, der erste gebogene Abschnitt (1104a) und der zweite gebogene Abschnitt (1104b) eine gestufte Form oder Z-Form bilden.

8. Elektroherd nach Anspruch 7, wobei sich der zweite gebogene Abschnitt (1104b) vom ersten gebogenen Abschnitt (1104a) in einer Richtung weg von der flachen Platte und/oder in einer Richtung zu einer angrenzenden Basisplatte (108a, 108b, 108c) erstreckt.

9. Elektroherd nach Anspruch 7 oder 8, wobei erste gebogene Abschnitte (1104a, 1206a) an benachbarten Kanten von angrenzenden Basisplatten (108a, 108b) ausgebildet sind, deren Oberflächen parallel zueinander verlaufen, und/oder
wobei zweite gebogene Abschnitte (1104b, 1206b), die an benachbarten Kanten von angrenzenden Basisplatten (108a, 108b) ausgebildet sind, einander überlappen.

10. Elektroherd nach Anspruch 7, 8 oder 9, der ferner Folgendes umfasst:
eine Verstärkungsstange (122a, 122b), die zwei gegenüberliegende Seitenflächen (U1, D1) des Gehäuses (102) verbindet,
wobei die Verstärkungsstange (122a, 122b) zwischen den ersten gebogenen Abschnitten (1104a, 1206a), die an benachbarten Kanten von angrenzenden Basisplatten (108a, 108b) ausgebildet sind, angeordnet ist, und/oder wenigstens einen der zweiten gebogenen Abschnitte (1104b, 1204d) trägt, die an benachbarten Kanten von angrenzenden Basisplatten (108a, 108b) ausgebildet sind.

11. Elektroherd nach einem der vorhergehenden Ansprüche 7 bis 10, wobei der erste gebogene Abschnitt (1204a, 1304a) von wenigstens einer der Basisplatten (108a, 108b) mit einer Seitenfläche des Gehäuses (102) in Flächenkontakt ist, und/oder
wobei sich der zweite gebogene Abschnitt (1204a, 1304a) von wenigstens einer der Basisplatten (108b, 108c) auf ein oberes Ende einer Seitenfläche des Gehäuses (102) stützt.

12. Elektroherd nach einem der vorhergehenden Ansprüche 7 bis 11, wobei eine erste Basisplatte (108a) eine erste flache Platte (702), einen (1-1)-ten gebogenen Abschnitt (1104a), einen (1-2)-ten gebogenen Abschnitt (1104b), einen (1-3)-ten gebogenen Abschnitt (1106a) und einen (1-4)-ten gebogenen Abschnitt (1106b) umfasst, wobei sich der (1-1)-te gebogene Abschnitt (1104a) unter einem Winkel von einem ersten Ende der ersten flachen Platte (702) erstreckt, und wobei sich der (1-2)-te gebogene Abschnitt (1104b) unter einem Winkel vom (1-1)-ten gebogenen Abschnitt (1104a) erstreckt, so dass die erste flache Platte (702), der (1-1)-te gebogene Abschnitt (1104a) und der (1-2)-te gebogene Abschnitt (1104b) eine gestufte Form oder Z-Form bilden, und
sich der (1-3)-te gebogene Abschnitt (1106a) unter einem Winkel von einem zweiten Ende der ersten flachen Platte (702), das dem ersten Ende gegenüberliegt, erstreckt, und sich der (1-4)-te gebogene Abschnitt (1106b) unter einem Winkel vom (1-3)-ten gebogenen Abschnitt (1106a) erstreckt, so dass die erste flache Platte (702), der (1-3)-te gebogene Abschnitt (1106a) und der (1-4)-te gebogene Abschnitt (1106b) eine gestufte Form oder Z-Form bilden.

13. Elektroherd nach Anspruch 12, der ferner eine zweite Basisplatte (108b) und eine dritte Basisplatte (108c) umfasst, die an gegenüberliegenden Seiten der ersten Basisplatte (108a) angeordnet sind,
wobei die zweite Basisplatte (108b) eine zweite flache Platte (802), einen (2-3)-ten gebogenen Abschnitt (1206a) und einen (2-4)-ten gebogenen Abschnitt (1204d) umfasst,
wobei sich der (2-3)-te gebogene Abschnitt (1206a) unter einem Winkel von einem ersten Ende der zweiten flachen Platte (802) erstreckt, und sich der (2-4)-te gebogene Abschnitt (1204d) unter einem Winkel vom (2-3)-ten gebogenen Abschnitt (1206a) erstreckt, so dass die zweite flache Platte (802), der (2-3)-te gebogene Abschnitt (1206a) und der (2-4)-te gebogene Abschnitt (1204d) eine gestufte Form oder Z-Form bilden, und
wobei die dritte Basisplatte (108c) eine dritte flache Platte (902), einen (3-1)-ten gebogenen Abschnitt (1304a) und einen (3-2)-ten gebogenen Abschnitt (1304b) umfasst,
wobei sich der (3-1)-te gebogene Abschnitt (1304a) unter einem Winkel von einem ersten Ende der dritten flachen Platte (902) erstreckt, und sich der (3-2)-te gebogene Abschnitt (1304b) unter einem Winkel vom (3-1)-ten gebogenen Abschnitt (1304a) erstreckt, so dass die dritte flache Platte (902), der (3-1)-te gebogene Abschnitt (1304a) und der (3-2)-te gebogene Abschnitt (1304b) eine gestufte Form oder Z-Form bilden,
wobei der (1-1)-te gebogene Abschnitt (1104a) und der (2-3)-te gebogene Abschnitt (1206a) parallel zueinander angeordnet sind, und der (1-2)-te gebogene Abschnitt (1104b) und der (2-4)-te gebogene Abschnitt (1204d) aneinander montiert sind, und
wobei der (1-3)-te gebogene Abschnitt (1106a) und der (3-1)-te gebogene Abschnitt (1304a) parallel zueinander angeordnet sind, und der (1-4)-te gebogene Abschnitt (1 106b) und der (3-2)-te gebogene Abschnitt (1304b) aneinander montiert sind.

14. Elektroherd nach Anspruch 13,
wobei die zweite Basisplatte (108b) ferner einen (2-1)-ten gebogenen Abschnitt (1204a) und einen (2-2)-ten gebogenen Abschnitt (1204b) umfasst,
wobei sich der (2-1)-te gebogene Abschnitt (1204a) unter einem Winkel von einem zweiten Ende der zweiten flachen Platte (802) erstreckt, und sich der (2-2)-te gebogene Abschnitt (1204b) unter einem Winkel vom (2-1)-ten gebogenen Abschnitt (1204a) erstreckt, so dass die zweite flache Platte (802), der (2-1)-te gebogene Abschnitt (1204a) und der (2-2)-te gebogene Abschnitt (1204b) eine gestufte Form oder Z-Form bilden, und
wobei der (2-2)-te gebogene Abschnitt (1204b) an einem oberen Ende einer Seitenfläche (R1) des Gehäuses (102) montiert ist; und
wobei die dritte Basisplatte (108c) ferner einen (3-3)-ten gebogenen Abschnitt (1304c) und einen (3-4)-ten gebogenen Abschnitt (1304d) umfasst,
wobei sich der (3-3)-te gebogene Abschnitt (1304c) unter einem Winkel von einem zweiten Ende der dritten flachen Platte (902) erstreckt, und sich der (3-4)-te gebogene Abschnitt (1304d) unter einem Winkel vom (3-3)-ten gebogenen Abschnitt (1304c) erstreckt, so dass die dritte flache Platte (902), der (3-3)-te gebogene Abschnitt (1304c) und der (3-4)-te gebogene Abschnitt (1304d) eine gestufte Form oder Z-Form bilden, und
wobei der (3-4)-te gebogene Abschnitt (1304d) an einem oberen Ende einer Seitenfläche (L1) des Gehäuses (102) montiert ist.

15. Elektroherd nach einem der vorhergehenden Ansprüche, wobei das Gehäuse (102) Montageabschnitte (1021) umfasst, die sich von Seitenflächen des Gehäuses (102) zum Inneren erstrecken, um die Basisplatten (108a, 108b, 108c) zu tragen.

## Revendications

1. Cuisinière électrique, comportant :
un caisson (102) ;
une plaque de recouvrement (104) couplée au caisson (102), pour placer un objet à chauffer sur la plaque de recouvrement (104) ;
une pluralité de blocs de chauffage (106a, 106b, 106c, 106d, 106e) reçus dans le caisson (102) et disposés sous la plaque de recouvrement (104) ; et
une pluralité de plaques de base (108a, 108b, 108c) disposées dans le caisson (102), la pluralité de blocs de chauffage (106a, 106b, 106c, 106d, 106e) étant agencée sur la pluralité de plaques de base (108a, 108b, 108c) ;
dans laquelle les plaques de base (108a, 108b, 108c) sont disposées côte à côte pour recouvrir une aire de section transversale du caisson (102) ;
**caractérisée en ce que** :
les plaques de base (108a, 108b, 108c) sont disposées en contact les unes avec les autres.

2. Cuisinière électrique selon la revendication 1, dans laquelle chaque plaque de la pluralité de plaques de base (108a, 108b, 108c) inclut une plaque plate (108a, 108b, 108c) et au moins une partie pliée (704, 706, 708, 710, 804, 806, 808, 810) formée à une extrémité de la plaque plate (702, 802, 902).

3. Cuisinière électrique selon la revendication 2, dans laquelle au moins une partie d'au moins une portion de la au moins une partie pliée (708, 710, 808, 810, 908, 910) est disposée en contact avec une surface latérale du caisson (102).

4. Cuisinière électrique selon la revendication 2 ou 3, dans laquelle chaque plaque de la pluralité de plaques de base (108a, 108b, 108c) inclut une partie pliée (704, 706, 806, 904) en contact avec une partie pliée (704, 706, 806, 904) d'une plaque de base (108a, 108b, 108c) adjacente et/ou couplée à celle-ci.

5. Cuisinière électrique selon l'une quelconque des revendications 2, 3 ou 4 précédentes, dans laquelle la au moins une partie pliée (704, 706, 708, 710, 804, 806, 808, 810) s'étend à partir de la plaque plate (702, 802, 902) dans une direction verticale.

6. Cuisinière électrique selon l'une quelconque des revendications précédentes, dans laquelle la pluralité de plaques de base (108a, 108b, 108c) inclut une première plaque de base (108a), une deuxième plaque de base (108b) et une troisième plaque de base (108c) agencées les unes après les autres le long d'une ligne droite.

7. Cuisinière électrique selon l'une quelconque des revendications précédentes, dans laquelle au moins une plaque de la pluralité de plaques de base (108a, 108b, 108c) inclut une plaque plate (702), une première partie pliée (1104a) s'étendant à partir de ladite plaque plate dans une direction verticale, et une seconde partie pliée (1104b) s'étendant à partir de la première partie pliée (1104a) dans une direction horizontale de telle sorte que la plaque plate, la première partie pliée (1104a) et la seconde partie pliée (1104b) forment une forme étagée ou une forme de Z.

8. Cuisinière électrique selon la revendication 7, dans laquelle la seconde partie pliée (1104b) s'étend à partir de la première partie pliée (1104a) dans une direction s'éloignant de la plaque plate et/ou dans une direction se rapprochant d'une plaque de base (108a, 108b, 108c) adjacente.

9. Cuisinière électrique selon la revendication 7 ou 8, dans laquelle des premières parties pliées (1104a, 1206a) formées sur des bords voisins de plaques de base (108a, 108b) adjacentes ont des surfaces s'étendant parallèlement l'une à l'autre, et/ou
dans laquelle des secondes parties pliées (1104b, 1206b) formées sur des bords voisins de plaques de base (108a, 108b) adjacentes se chevauchent mutuellement.

10. Cuisinière électrique selon la revendication 7, 8 ou 9, comportant en outre :
une poutre de renfort (122a, 122b) reliant deux surfaces latérales opposées (U1, D1) du caisson (102),
dans laquelle la poutre de renfort (122a, 122b) est disposée entre des premières parties pliées (1104a, 1206a) formées sur des bords voisins de plaques de base (108a, 108b) adjacentes et/ou supporte au moins une des secondes parties pliées (1104b, 1204b) formées sur des bords voisins de plaques de base (108a, 108b) adjacentes.

11. Cuisinière électrique selon l'une quelconque des revendications 7 à 10 précédentes, dans laquelle la première partie pliée (1204a, 1304a) d'au moins une des plaques de base (108b, 108c) est en contact de surface avec une surface latérale du caisson (102) et/ou
dans laquelle la seconde partie pliée (1204a, 1304a) d'au moins une des plaques de base (108b, 108c) porte sur une extrémité supérieure d'une surface latérale du caisson (102).

12. Cuisinière électrique selon l'une quelconque des revendications 7 à 11 précédentes, dans laquelle une première plaque de base (108a) inclut une première plaque plate (702), une (1-1)ème partie pliée (1104a), une (1-2)ème partie pliée (1104b), une (1-3)ème partie pliée (1106a) et une (1-4)ème partie pliée (1106b), la (1-1)ème partie pliée (1104a) s'étendant à un angle par rapport à une première extrémité de la première plaque plate (702), et la (1-2)ème partie pliée (1104b) s'étendant à un angle par rapport à la (1-1)ème partie pliée (1104a), de telle sorte que la première plaque plate (702), la (1-1)ème partie pliée (1104a) et la (1-2)ème partie pliée (1104b) forment une forme étagée ou une forme de Z et
la (1-3)ème partie pliée (1106a) s'étendant à un angle par rapport à une seconde extrémité de la première plaque plate (702) étant opposée à la première extrémité, et la (1-4)ème partie pliée (1106b) s'étendant à un angle par rapport à la (1-3)ème partie pliée (1106a), de telle sorte que la première plaque plate (702), la (1-3)ème partie pliée (1106a) et la (1-4)ème partie pliée (1106b) forment une forme étagée ou une forme de Z.

13. Cuisinière électrique selon la revendication 12, comportant en outre une deuxième plaque de base (108b) et une troisième plaque de base (108c) disposées sur des côtés opposés de la première plaque de base (108a),
dans laquelle la deuxième plaque de base (108b) inclut une deuxième plaque plate (802), une (2-3)ème partie pliée (1206a) et une (2-4)ème partie pliée (1204d),
la (2-3)ème partie pliée (1206a) s'étendant à un angle par rapport à une première extrémité d'une deuxième plaque plate (802), et la (2-4)ème partie pliée (1204d) s'étendant à un angle par rapport à la (2-3)ème seconde partie pliée (1206a), de telle sorte que la deuxième plaque plate (802), la (2-3) partie pliée (1206a) et la (2-4)ème partie pliée (1204d) forment une forme étagée ou une forme de Z, et
dans laquelle la troisième plaque de base (108c) inclut une troisième plaque plate (902), une (3-1)ème partie pliée (1304a) et une (3-2)ème partie pliée (1304b),
la (3-1)ème partie pliée (1304a) s'étendant à un angle par rapport à une première extrémité de la troisième plaque plate (902), et la (3-2)ème partie pliée (1304b) s'étendant à un angle par rapport à la (3-1)ème partie pliée, de telle sorte que la troisième plaque plate (902), la (3-1)ème partie pliée (1304a) et la (3-2)ème partie pliée (1304b) forment une forme étagée ou une forme de Z,
dans laquelle la (1-1)ème partie pliée (1104a) et la (2-3)ème partie pliée (1206a) sont disposées parallèlement, et la (1-2)ème partie pliée (1104b) et la (2-4)ème partie pliée (1204d) sont montées l'une sur l'autre, et
dans laquelle la (1-3)ème partie pliée (1106a) et la (3-1)ème partie pliée (1304a) sont disposées parallèlement, et la (1-4)ème partie pliée (1106b) et la (3-2)ème partie pliée (1304b) sont montées l'une sur l'autre.

14. Cuisinière électrique selon la revendication 13,
dans laquelle la deuxième plaque de base (108b) inclut en outre une (2-1)ème partie pliée (1204a) et une (2-2)ème partie pliée (1204b),
la (2-1)ème partie pliée (1204a) s'étendant à un angle par rapport à une seconde extrémité de la deuxième plaque plate (802), et la (2-2)ème partie pliée (1204b) s'étendant à un angle par rapport à la (2-1)ème partie pliée (1204a), de telle sorte que la deuxième plaque plate (802), la (2-1)ème partie pliée (1204a) et la (2-2)ème partie pliée (1204b) forment une forme étagée ou une forme de Z, et
dans laquelle la (2-2)ème partie pliée (1204b) est montée sur une extrémité supérieure d'une surface latérale (R1) du caisson (102) ; et
dans laquelle la troisième plaque de base (108c) inclut en outre une (3-3)ème partie pliée (1304c) et une (3-4)ème partie pliée (1304d),
la (3-3)ème partie pliée (1304c) s'étendant à un angle par rapport à une seconde extrémité de la troisième plaque plate (902), et la (3-4)ème partie pliée (1304d) s'étendant à un angle par rapport à la (3-3)ème partie pliée (1304c), de telle sorte que la troisième plaque plate (902), la (3-3)ème partie pliée (1304c) et la (3-4)ème partie pliée (1304d) forment une forme étagée ou une forme de Z, et
dans laquelle la (3-4)ème partie pliée (1304d) est montée sur une extrémité supérieure d'une surface latérale (R1) du caisson (102).

15. Cuisinière électrique selon l'une quelconque des revendications précédentes, dans laquelle le caisson (102) inclut des parties de montage (1021) s'étendant à partir de surfaces latérales du caisson (102) vers un intérieur de celui-ci, pour supporter les plaques de base (108a, 108b, 108c).
